# EUROPEAN PATENT SPECIFICATION

(11) **EP 2 619 862 B1**
(45) Date of publication and mention of the grant of the patent: **28.09.2016**
(21) Application number: 11761119.4
(22) Date of filing: 12.08.2011
(51) Int. Cl.: H02B 1/38, H02B 13/025

(54) **A SCREWLESS COVER MECHANIZED WITH A LOCK**
MIT EINER VERRIEGELUNG MECHANISIERTE SCHRAUBENLOSE ABDECKUNG
COUVERCLE SANS VIS MÉCANISÉ AVEC UNE SERRURE

(30) Priority: 25.08.2010 AU 2010214663
(43) Date of publication of application: 31.07.2013
(73) Proprietor: Elsteel Denmark A/S, 3000 Helsingør (DK)
(72) Inventor: LOGSTRUP, Erik, Katunayaka 11420 (LK)
(86) International application number: PCT/IB2011/001893
(87) International publication number: WO 2012/025809

(56) References cited:
- DE-A1- 3 903 118
- DE-A1- 4 312 025
- DE-A1- 19 626 481
- DE-A1-102004 053 613
- DE-C1- 19 939 614

## Description

### The Technical Field

The present invention concerns a screwless cover which has been mechanized with a lock and is intended to be used as covers for electrical enclosures.

### The Background Art

Covers or housings for electrical enclosures play a major function in protecting the equipment inside the enclosure from foreign entities and also protecting persons handling the equipment from hazardous parts inside the enclosure; but for maintenance and renovation purposes of the equipment in the enclosure, it is required that these covers implement an easy but secure mode of installation and removal. A majority of these covers are metal sheets with through holes for bolts to be inserted and screwed into so that the covers are fixed on to the framework of the electrical enclosure.

Improvements were made to this structure; whereas a wide range of fixing concepts was being utilized. The metal bolts were replaced by plastic screws, rotational locks and such preferred substitutes. However, all these concepts involved a screwing mechanism which proved to be inconvenient.

In order to eliminate this *screwing* concept, screwless covers were implemented. These covers did not consist of any screwing mechanism, where this feature was achieved by using locking means that employed hooks, clips or latches which were attached to the inner or outer sides of the cover. However, it was the user's obligation to ensure that all the latches or clips were properly locked in order to maintain a risk-free usage of the electrical enclosure on to which the covers were fixed. Yet, there still was no firm evidence that the cover was accurately fixed to the structure of the electrical enclosure. Another difficulty which could not be overcome was the hassle that existed to facilitate the removal of the covers. The closest prior related to the covers of electrical enclosures are found in D1: DE 10 2004 053613 A1 (SIEMENS AG [DE]) 11 May 2006 and D2: DE 196 26 481 A1 (ABB PATENT GMBH [DE]) 08 January 1998. D1 discloses a switching system having a detachable arc limitation mechanism. It devises an unlocking mechanism where the operation of the switching system is only possible when the arc limitation system is mounted. D2 discloses a switching cubical for medium or low voltage control equipment having a door opening outwards which is lowered or lifted so that that the hooks on the door or cubicle are released from projections on the cubicle or door respectively. The door is lowered or raised using a rotatable spiral coulisse which is mounted with upper lintel of the door.

### The Disclosure of the Invention

An electrical enclosure with a cover according to the invention is defined in claim 1.

The embodiment of the invention relates to an electrical enclosure with a screwless cover comprising of a lock mechanism that provides for means of housing for an electrical enclosure. The mechanizing of the screwless cover with a lock, thus producing one unit, presents a solution to a novel and convenient approach of fixing the cover on to the electrical enclosure and also detaching the cover from the electrical enclosure.

This lock involves a mechanism which makes the screwless cover unique. The mechanism is such that when the lock is shifted to the unlock position it automatically assists the screwless cover to detach from the electrical enclosure, whereas when the lock is shifted back to the lock position it engages to the electrical enclosure only if the screwless cover has been accurately fastened to the electrical enclosure.

As a result, maximum safety can be guaranteed when the involved electrical enclosure is in function. This invention therefore proves to be advantageous and novel compared to covers or screwless covers that were introduced in the past as mentioned earlier.

Another assisting feature is that this embodiment doesn't even require a handle to assemble or disassemble the screwless cover.

### Introduction to Drawings

An example of the invention will be described by referring to the accompanying drawings:
FIG.1. a perspective view of the embodiment with all relevant components being illustrated.
FIG.2. front (outside) view of the screwless cover mechanized with a lock for electrical enclosures.
FIG.3. back (inside) view of the screwless cover mechanized with a lock for electrical enclosures.
A close-up view of the lock is illustrated in the following drawings:
FIG.4. the front view of the lock.
FIG.5. the locking disc, which is a component of the lock, from the back view of the screwless cover.
FIG.6. the locking disc of the lock in unlock position when viewed through the locking bracket which is fixed at the top of the framework of the electrical enclosure.
FIG.7. the locking disc of the lock in lock position when viewed through the locking bracket which is fixed at the top of the framework of the electrical enclosure.
FIG.8. an exploded view of the components of the lock which integrates to provide the locking mechanism.

### Description of Exemplary Embodiment

In the drawings, each essential component of the screwless cover which is mechanized with a lock has been illustrated for comprehending purposes.

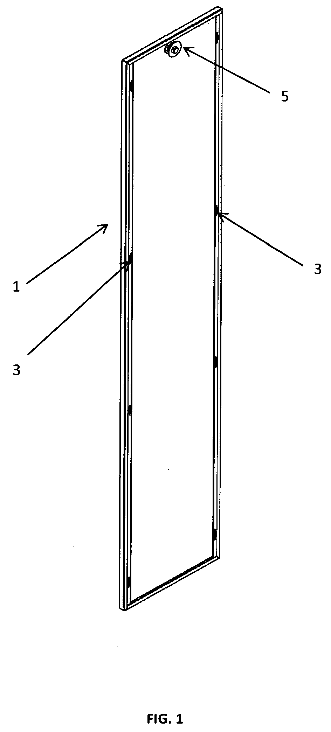

Referring to FIG.1, a screwless cover **1** comprising of a lock **2** is the basis of housing an electrical enclosure. The screwless cover **1** has an inward bend on all four sides. On the vertical inward bends, that is, the left and right inward bends, a series of irregular hexagonal cut-outs **3** are cut through in order to provide for a rigid assembling of the screwless cover **1** onto the enclosure by allowing a set of insert brackets, which are fixed on the enclosure structure, to engage with the irregular hexagonal cut-outs **3.** FIG.1 specifically portrays the screwless cover **1** and a fixed lock **2** with a mechanism that distinguishes the whole structure as will be observed further on.

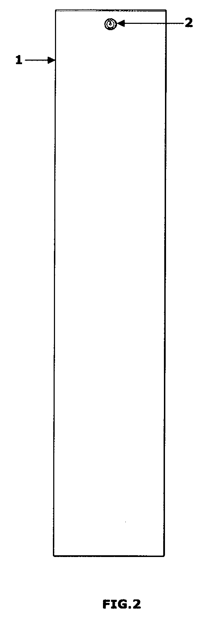

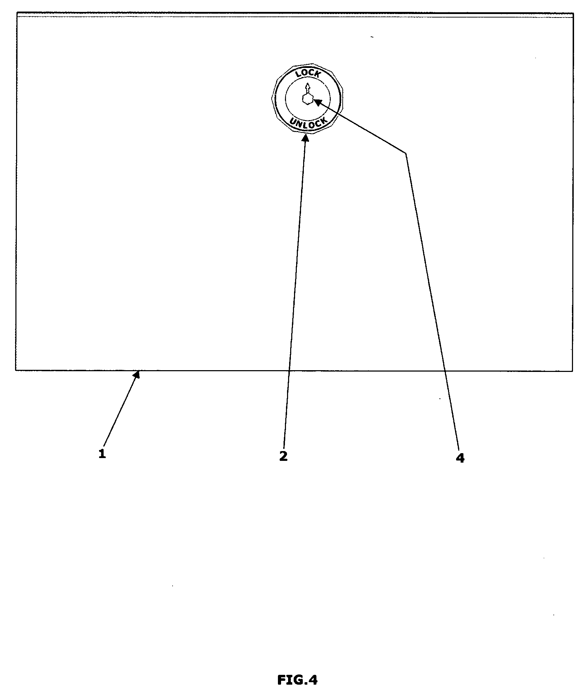

Referring now to FIG.2 and FIG.4, the front (outside) view of the screwless cover **1** is illustrated. The view which is observed in FIG.2 is the exact view that would be seen by the user during assembling and disassembling of the screwless cover **1.** Towards the top of the screwless cover **1,** as illustrated is a lock **2** with a small key hole **4** aligned to the lock's centre axis. The lock **2** is inserted in to a cut-out which is positioned at the top horizontal midpoint of the screwless cover **1.**

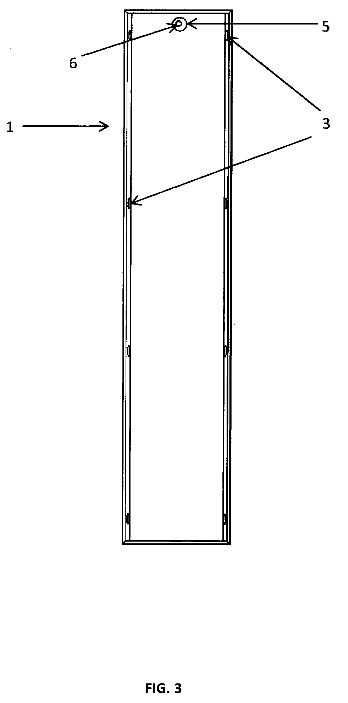

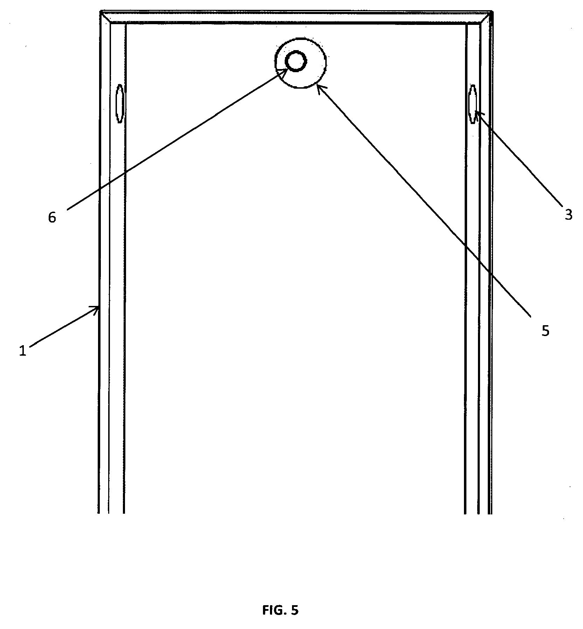

Referring to FIG.3 and FIG.5, is the back (inside) view of the screwless cover **1** with the inner view of the lock **2** and irregular hexagonal cut-outs **3** on the vertical inward bends of the screwless cover **1.** The fastening nut **6** of lock **2** is aligned to the centre axis of lock **2** whereas the centre axis of locking disc **5** has an offset with reference to the centre axis of the key hole **4** and fastening nut **6** of the lock **2.** As mentioned previously, a set of insert brackets which are fixed on the left and right vertical sides of the enclosure's framework are allowed to insert into the irregular hexagonal cut-outs **3;** thus rigidly assembling the screwless cover **1** onto the enclosure's framework. The irregular hexagonal cut-outs **3** on each side are spaced at an equal distance to provide stability to the assembly.

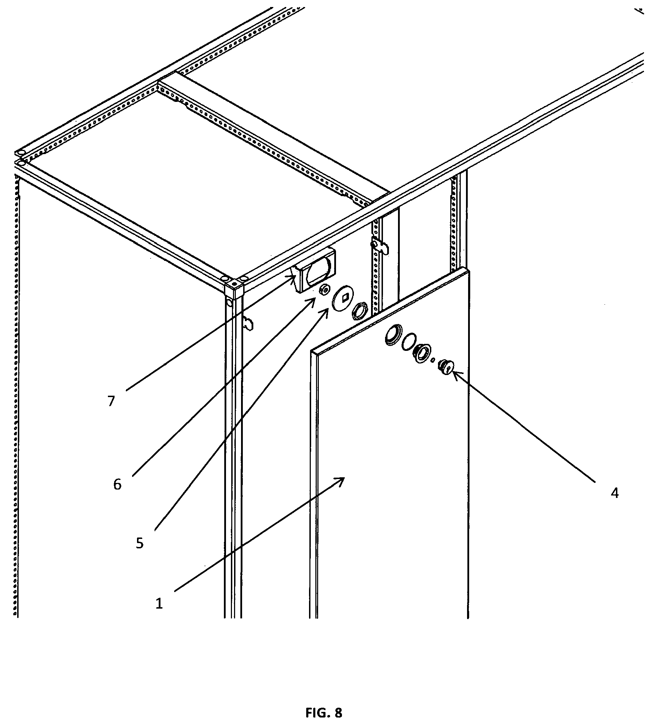

Referring to FIG.8, the exploded view of the lock **2** in the sequence of assembly is illustrated, while the front view of the lock **2** is shown in FIG.4. The locking disc **5** is fastened with the fastening nut **6** at an offset from the centre axis of the locking disc **5.** This offset is the principal factor that provides for the locking and unlocking of the lock **2** which would be demonstrated next.

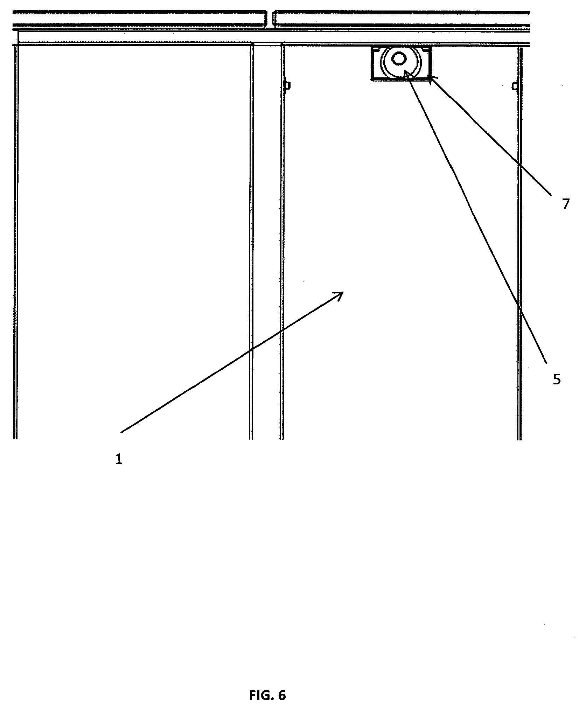

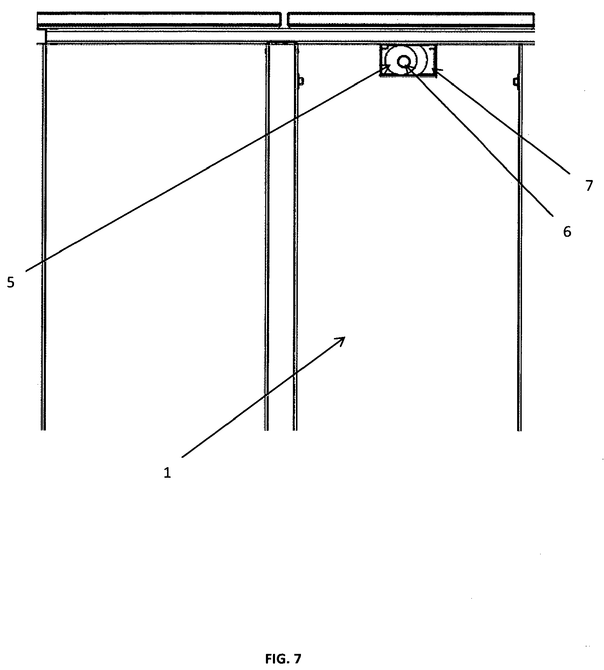

Referring to FIG.6 and FIG.7, are illustrations of the locking disc **5** in unlock position and lock position respectively. The locking bracket **7** is fixed at the top horizontal midpoint of the framework. When the screwless cover **1** is securely assembled to the enclosure, the locking disc **5** is rotated by using a key to turn the keyhole **4** by 180° in any direction. When locked, a portion of the locking disc **5** has been blocked by the locking bracket **7,** as illustrated in FIG.7, thus ensuring a tight assembly of the screwless cover **1.** Once the lock has to be unlocked, a key is used to turn the keyhole by 180° in any direction. Due to the offset of the centre axis of the locking disc **5** with reference to the lock's centre axis, the locking disc **5** rotates and attempts to overlap the lower surface of the locking bracket **7,** thus essentially forcing the screwless cover **1** upwards allowing space for the locking disc **5** to rotate and simultaneously disengaging the irregular hexagonal cut-outs from the insert brackets which are fixed on the framework of the enclosure. At this disengaging instance, the screwless cover **1** can be easily removed from the enclosure by lifting the screwless cover **1** with the key itself; meaning, a handle is not even employed to remove the screwless cover **1** which could be done with minimal effort.

When the screwless cover **1** is required to be assembled onto the panel structure, it is simply placed so that the irregular hexagonal cut-outs **3** allow the insertion of the insert brackets which are fixed to the vertical framework of the enclosure. Once the screwless cover **1** is in place, the lock **2** is shifted into locking position as explained previously. At the instance of the lock shifting into proper locking mode, a clicking sound is emitted thus guaranteeing the lock **2** shifting into lock position as shown in FIG.7. This sound is emitted when the locking disc **5** rotates and clips the top or bottom surface of the locking bracket **7.** This clicking sound is also emitted when the lock has been accurately shifted in to unlock position. The outer side of the lock **2** has been appropriately labeled 'lock' and 'unlock' in order to conveniently distinguish between the two.

Even though the exemplary embodiments are illustrated and described as above, these embodiments are used as means of acting as an example. Whereas these embodiments are not limited to that of the demonstrated, but they may be subjected to modifications and alterations that however will remain within the scope of the intended claims. Modification and alterations may comprise of factors such as minor changes in dimensions or materials used. Any other technical enhancement will be evident as common knowledge or ordinary skill in the respective subject.

### Industrial Applicability

This invention, which concerns an electrical enclosure with a screwless cover which has been mechanized with a lock-can be used for various applications. The electrical enclosure can include equipment such as low-voltage switchgear, medium-voltage switchgear, high-voltage switchgear, cable boxes and the like. Hence the industrial applicability of this invention expands to a vast amount of sectors where such enclosures are being used especially as electrical control centers.

## Claims

1. An electrical enclosure with a cover (1), which requires neither screws nor hinges to mount on to frame structure of such electrical enclosure and is having hexagonal cut-outs on the cover's inward vertical bends and insert brackets fixed to the frame structure of such electrical enclosure, **characterized in that** the cover is mechanized with a locking assembly comprising:
(a) a lock (2) with a key hole (4) aligned to the center axis of the lock (2) inserted into a cut-out on the top horizontal midpoint of the cover (1);
(b) a locking disc (5) having an offset with reference to the centre axis of the lock (2);
(c) a fastening nut (6) aligned to the center axis of the lock (2), which fixes the locking disc (5) to the lock (2) with an offset, all of which are assembled to the cover (1) and
(d) a locking bracket (7) fixed to a top horizontal frame member of the electrical enclosure,
such that for unlocking of the cover (1), the locking disc (5) is rotated with a key in clockwise or anti-clockwise direction until the locking disc (5) strikes and slides on the bottom surface (9) of the locking bracket (7) and reaches the "unlock" position while allowing rotational space for the locking disc (5) and thereby the cover (1) is lifted upwards disengaging hexagonal cut-outs (3) from the insert brackets, enabling the cover (1) to be unlocked.

2. An electrical enclosure with a cover (1) in accordance with claim 1, **characterized in that** the centre axis of the locking disc (5) has an offset with reference to the centre axis of the lock (2) when they are fixed together.

3. An electrical enclosure with a cover (1) in accordance with claim 1, **characterized in that** the lock (2) is rotatable towards clockwise or anti-clockwise direction from "lock" position to "unlock" position or vice versa with no restriction to the direction of rotation.

4. An electrical enclosure with a cover (1) in accordance with claim 1, **characterized in that** the lock is positioned towards closer to top horizontal edge of the cover (1) and on the middle vertical line of the top horizontal edge of the cover (1).

5. An electrical enclosure with a cover (1) in accordance with claim 1, **characterized in that** the lock (2) is defined to have the "lock" position and "unlock" position on the vertical line runs through the centre of the lock (2) and right below the other on the top and bottom of the lock (2), having an angle of 180° with reference to each position.

6. A method for unlocking of a cover from an electrical enclosure in accordance with Claim No. 1 and 2, comprising the steps of:
a. rotating the locking disc (5) with a key inserted into the key hole (4) towards clockwise or anti-clockwise direction;
b. locking disc (5) strikes and slides on the bottom surface (9) of the locking bracket (7);
c. cover (1) is lifted upwards disengaging hexagonal cut-outs (3) from the insert brackets;
d. lock (2) reaches the "unlock" position and
e. cover (1) is lifted out of the enclosure's frame structure using the same key inserted into the key hole (4).

## Patentansprüche

1. Ein elektrisches Gehäuse mit einem Abdeckung (1), die weder Schrauben erfordert noch Scharniere an Rahmenstruktur eines solchen elektrischen Gehäuse zu montieren und betriebsbereit ist die Abdeckung der inneren vertikalen Bögen hexagonal Aussparungen aufweisen und Klammern befestigt an der Rahmenstruktur eines solchen elektrischen einfügen Gehäuse, mit einer Verriegelungsanordnung, umfassend mechanisiert:
a. ein Verriegelungs (2) mit einem Schlüsselloch (4) zu der Mittelachse des Verriegelungs ausgerichtet (2) in eine Aussparung auf der oberen horizontalen Mittelpunkt des Abdeckung (1) eingefügt ist;
b. eine Verriegelungsscheibe (5) mit einem mit Bezug auf die Mittelachse des Verriegelungsoffset;
c. eine Befestigungsmutter (6) zur Mittelachse des Verriegelungs ausgerichtet ist (2), welche die Verriegelungsscheibe (5) mit dem Verriegelungs fixiert (2) mit einem Versatz, von denen alle an der Abdeckung montiert sind (1) und
d. einen Verriegeiungsbügel (7) des Elektrogehäuse mit einem oberen Element horizontalen Rahmen befestigt ist,
so daß mit einem Schlüssel im Uhrzeigersinn oder gegen den Uhrzeigersinn, bis die Verriegelungsscheibe (5) trifft, und gleitet auf der Bodenfläche (9) des Verriegelungsbugel (7) gedreht Halterung zum Entriegeln des Abdeckung (1) wird die Verriegelungsscheibe (5) (7) und erreicht die "Unlock" Position, während Drehraum für die Verriegelungsscheibe erlaubt (5) und dadurch die Abdeckung (1) nach oben angehoben wird Ausrücken hexagonal Aussparungen (3) von den Einsatz Bügel, so dass der Abdeckung (1) entriegelt werden.

2. Ein elektrisches Gehäuse mit einer Abdeckung (1) nach Anspruch 1, **dadurch gekennzeichnet, dass** die Mittelachse der Verriegelungsscheibe (5) einen Versatz mit Bezug auf die Mittelachse des Verriegelungs (2), wenn sie miteinander befestigt sind.

3. Ein elektrisches Gehäuse mit einer Abdeckung (1) nach Anspruch 1, **dadurch gekennzeichnet, daß** das Verriegelugus (2) in Richtung im Uhrzeigersinn drehbar ist, oder gegen den Uhrzeigersinn von der Position "lock" zu "unlock" position oder umgekehrt , ohne Beschränkung auf die Drehrichtung.

4. Ein elektrisches Gehäuse mit einem Abdeckung(1) nach Anspruch 1, **dadurch gekennzeichnet, daß** das Verriegelugus in Richtung näher positioniert ist, horizontalen Rand der Abdeckung (1) und auf der mittleren vertikalen Linie der oberen horizontalen Rand der Abdeckung (1).

5. Ein elektrisches Gehäuse mit einer Abdeckung (1) nach Anspruch 1, **dadurch gekennzeichnet, daß** das Verriegelugus (2) ist definiert als die "lock" position und "unlock" position auf der vertikalen Linie zu haben, verläuft durch das Zentrum des Verriegelungs (2) und rechts unter dem anderen auf der Ober- und Unterseite des Verriegelungs (2), um jede Position einen Winkel von 180° mit Bezug zu müssen.

6. Verfahren zur Herstellung von einem elektrischen Gehäuse gemäß einer Abdeckung Entriegeln Anspruch Nr 1 und 2, umfassend die Schritte:
a. Drehen der Verriegelungsscheibe (5) mit einem Schlüssel in das Schlüsselloch (4) in Richtung im Uhrzeigersinn oder gegen den Uhrzeigersinn einge;
b. Verriegelungsscheibe (5) trifft, und gleitet auf der Bodenfläche (9) der Verriegelungsbügels (7);
c. Abdeckung (1) nach oben hexagonal Aussparungen (3) von den Einsatz Bügel angehoben Ausrücken;
d. Verriegelungs (2) position, um die "unlock" erreicht und
a. Abdeckung (1) aus dem Gehäuserahmen Struktur hob den gleichen Schlüssel in das Schlüsselloch eingeführt (4) verwendet.

## Revendications

1. Une enceinte électrique avec un couvercle (1), qui ne nécessite ni vis ni charnières à monter sur la structure de châssis d'un tel enceinte électrique et ayant des découpes hexagonales dans les virages verticaux vers l'intérieur du couvercle et insérer les supports fixes à la structure de châssis d'un tel électrique enceinte, est mécanisée avec un ensemble de verrouillage comprenant:
a. un verrou (2) avec un trou de clé (4) alignée sur l'axe central de la verrou (2) inséré dans une découpe sur le point médian horizontal supérieur du couvercle (1);
b. un disque de verrouillage (5) présentant un décalage par rapport à l'axe central de verrou (2);
c. un écrou de fixation (6) aligné sur l'axe central du verrou (2), qui fixe le disque de verrouillage (5) à verrou (2), avec un décalage, qui sont assemblées au couvercle (1), et
d. une patte de verrouillage (7) fixé à un élément de cadre horizontal supérieur de l'enceinte électrique,
de telle sorte que pour le déverrouillage du couvercle (1), le disque de verrouillage (5) est tourné avec une clé dans le sens horaire ou le sens anti-horaire jusqu'à ce que le disque (5) frappe et glisse sur la surface de fond (9) de l'étrier de verrouillage de verrouillage (7) et atteint la position "de déverrouillage", tout en permettant un espace de rotation pour le disque de verrouillage (5) et ainsi le couvercle (1) est soulevé vers le haut dégageant des découpes hexagonales (3) à partir des supports d'insertion, ce qui permet la couverture (1) être déverrouillé.

2. Une enceinte électrique avec un couvercle (1) selon la revendication 1, **caractérisé en ce que** l'axe du disque de verrouillage central (5) présente un décalage par rapport à l'axe central de la verrou (2) lorsqu'ils sont fixés ensemble.

3. Une enceinte électrique avec un couvercle (1) selon la revendication 1, **caractérisé en ce que** la verrou (2) peut tourner vers le sens horaire ou anti-horaire de la position "verrouiller" à "déverrouiller" la position ou vice versa sans restriction à la direction de rotation.

4. Une enceinte électrique avec un couvercle (1) selon la revendication 1, **caractérisé en ce que** le verrou est positionné vers plus proche du bord supérieur horizontal du couvercle (1) et sur la ligne médiane verticale du bord horizontal supérieur du couvercle (1).

5. Une enceinte électrique avec un couvercle (1) selon la revendication 1, **caractérisé en ce que** la verrou (2) est défini pour avoir la position de "verrouillage" et la position "déverrouillée" à la verticale Une enceinte électrique avec un couvercle (1) selon la revendication 1, **caractérisé en ce que** la verrou (2) est défini pour avoir la position de "verrouillage" et la position "de déverrouillage" sur la ligne verticale passe à travers le centre de la verrou (2) et juste en dessous de l'autre sur le dessus et le dessous du verrou (2), ayant un angle de 180° par rapport à chaque position.

6. Procédé pour le déverrouillage d'un couvercle d'un enceinte électrique selon la revendication n° 1 et 2, comprenant les étapes consistant à:
a. faire tourner le disque de verrouillage (5) avec une clé insérée dans le trou de clé (4) vers la droite ou sens anti-horaire;
b. disque de verrouillage (5) frappe et glisse sur la surface de fond (9) de la console de verrouillage (7);
c. couvrir (1) est soulevé vers le haut désengage des découpes hexagonales (3) à partir des supports d'insertion;
d. verrouiller (2) atteint la position "déverrouillage" et
e. Couverture (1) est soulevé hors de la structure de châssis du châssis à l'aide de la même clé insérée dans le trou de clé (4).
